# FASCICULE DE BREVET EUROPEEN

(11) **EP 3 431 145 B1**
(45) Date de publication et mention de la délivrance du brevet: **20.11.2019**
(21) Numéro de dépôt: 18183797.2
(22) Date de dépôt: 16.07.2018
(51) Int. Cl.: A62B 7/14, A62B 25/00, B64D 10/00, A62B 18/08, A62B 18/02

(54) **ENSEMBLE RESPIRATOIRE POUR AERONEF**
BEATMUNGSANORDNUNG FÜR LUFTFAHRZEUG
RESPIRATORY ASSEMBLY FOR AIRCRAFT

(30) Priorité: 20.07.2017 FR 1756884; 30.10.2017 FR 1760257
(43) Date de publication de la demande: 23.01.2019
(73) Titulaire: Zodiac Aerotechnics, 78373 Plaisir Cedex (FR)
(72) Inventeur: SIBUET, Jean-Philippe, 78480 Verneuil Sur Seine (FR); PECASTAING, Luc, 91310 Linas (FR)
(74) Mandataire: Plasseraud IP

(56) Documents cités:
- WO-A1-2013/064856
- WO-A1-2016/113584
- US-A1- 2003 188 989

## Description

### Domaine de l'invention

L'invention concerne un ensemble respiratoire pour aéronef. Plus précisément, selon l'invention, ledit ensemble respiratoire est du type comprenant essentiellement un équipement respiratoire muni d'un harnais gonflable et un dispositif de rangement.

En particulier, l'invention concerne un ensemble respiratoire pour aéronef comprenant :
- un équipement respiratoire destiné à fournir un gaz respiratoire à un utilisateur comportant :
   - un support rigide,
   - une coque liée au support rigide, la coque présentant une cavité respiratoire et étant adaptée pour s'appliquer sur le visage de l'utilisateur autour de la bouche et du nez de l'utilisateur,
   - un harnais adapté pour s'étendre autour de la tête de l'utilisateur à l'opposé de la coque, afin de maintenir la coque sur le visage de l'utilisateur,
   - une sangle présentant une partie de préhension et une partie de liaison, la partie de liaison étant liée au harnais,
- un dispositif de rangement comportant :
   - un logement adapté pour recevoir l'équipement respiratoire dans une position rangée, ledit logement présentant une ouverture, et
   - un dispositif d'obturation comportant au moins une porte présentant une face interne et une face externe, le dispositif d'obturation est mobile entre une position fermée dans laquelle le dispositif d'obturation obture au moins partiellement l'ouverture et une position ouverte dans laquelle il est au moins en partie à l'écart de l'ouverture pour dégager ladite ouverture et permettre de sortir l'équipement respiratoire du dispositif de rangement.

Un tel ensemble respiratoire est décrit dans le document WO2013/064856A1. L'équipement respiratoire habituellement utilisé par les membres de l'équipage de l'avion doit être mis sûrement et rapidement sur la tête du pilote. Cette opération ne doit nécessiter qu'une seule main, car l'autre main est souvent requise pour d'autres tâches essentielles.

Par exemple, si, en raison d'une panne de pressurisation, le pilote d'un avion doit rapidement mettre son équipement respiratoire destiné à lui fournir l'oxygène nécessaire pour respirer, il doit souvent le faire d'une main tandis que son autre main est occupée à contrôler l'avion. Ainsi, l'utilisation d'un harnais de tête gonflable a été suggérée pour permettre la mise en place de l'équipement respiratoire d'une seule main. Généralement, le harnais de tête a sensiblement une forme de dôme ou une forme annulaire et est dilaté diamétralement par l'introduction de gaz sous pression pour provoquer l'augmentation de taille du harnais afin qu'il puisse être positionné sur la tête de l'utilisateur. Le flux de gaz est contrôlé par une soupape attachée à l'équipement respiratoire et, après agrandissement du harnais, l'équipement respiratoire est placé contre le visage de l'utilisateur, le harnais étant étendu et espacé de l'arrière de la tête. Une fois que l'équipement respiratoire est correctement positionné, la pression dans le harnais est relâchée, ce qui amène le harnais à se contracter et à venir au contact de la tête du pilote (en l'enserrant légèrement), de sorte que l'équipement respiratoire est bien maintenu dans sa position correcte. Pendant ce temps, l'autre main du pilote est libre de contrôler l'avion ou d'effectuer d'autres tâches qui peuvent être nécessaires.

La sangle permet de faire en sorte que lors du rangement de l'équipement respiratoire dans le dispositif de rangement, le harnais se trouve à l'extérieur de la cavité de l'équipement respiratoire. Ainsi, le risque d'avoir un pli du harnais inséré dans la cavité du équipement respiratoire lorsque le harnais commence à se gonfler est réduit, de sorte que le risque d'un problème de gonflement du harnais est réduit.

L'invention vise à procurer une meilleure sécurité liée à la nécessité de mettre l'équipement respiratoire en temps court.

### Exposé de l'invention

A cet effet, conformément à l'invention, l'ensemble respiratoire présente les caractéristiques suivantes :
- le dispositif de rangement comprend en outre un dispositif de sollicitation apte à agir sur la porte pour écarter la porte de l'ouverture lorsque le dispositif d'obturation est en position fermée,
- l'équipement respiratoire comprend en outre un élément de retenue liée à une portion de retenue de la sangle, and
- le dispositif de rangement comprend une partie de coopération apte à coopérer avec l'élément de retenue pour s'opposer à l'action du dispositif de sollicitation et maintenir le dispositif d'obturation en position fermée, lorsque l'équipement respiratoire est en position rangée.

Ainsi, lorsque la sangle a été utilisée pour correctement positionner le harnais par rapport au masque respiratoire, l'élément de retenue maintient le dispositif d'obturation en position fermée. Si le harnais n'a pas été correctement positionné par rapport au masque respiratoire, l'élément de retenue ne permet pas de maintenir le dispositif d'obturation en position fermée. L'utilisateur peut ainsi aisément vérifier si le harnais a été correctement positionné grâce à l'état du dispositif d'obturation (de la porte). En outre, le dispositif d'obturation doit être à l'état fermé pour qu'un pilote soit autorisé à faire décoller un aéronef. La sécurité se trouve par conséquent renforcée.

Selon une autre caractéristique conforme à l'invention, de préférence la partie de coopération s'étend sur la face externe de la porte et vient en butée contre l'élément de retenue, lorsque l'équipement respiratoire est en position rangée.

Cette solution est simple et robuste.

Selon une caractéristique complémentaire conforme à l'invention, de préférence le dispositif d'obturation présente un passage lorsqu'il est en position fermée, et la sangle s'étend à travers le passage du dispositif d'obturation et l'élément de retenue est une tige s'étendant contre la face externe de la porte.

Selon une caractéristique alternative conforme à l'invention, l'élément de retenue forme de préférence un crochet, et plus préférentiellement le dispositif d'obturation présente un passage lorsqu'il est en position fermée, et le crochet comprend une âme et une surface d'arrêt, lorsque l'équipement respiratoire est en position rangée, l'âme s'étend à travers le passage et la surface d'arrêt est en appui sur la face externe.

Selon une autre caractéristique conforme à l'invention, de préférence la porte est globalement plane et présente un contour, la porte présente une découpe en creux (encoche) dans son contour formant ledit passage.

Selon encore une autre caractéristique conforme à l'invention, de préférence ladite porte est une première porte, le dispositif d'obturation comprend en outre une deuxième porte, et le dispositif de sollicitation est apte à agir sur chacune des première porte et deuxième porte pour les écarter de l'ouverture lorsque le dispositif d'obturation est en position fermée.

Selon une caractéristique alternative conforme à l'invention, de préférence ladite porte est une première porte, le dispositif d'obturation comprend en outre une deuxième porte, et le dispositif de sollicitation n'est apte à agir que sur la première porte pour l'écarter de l'ouverture lorsque le dispositif d'obturation est en position fermée.

Selon une autre caractéristique conforme à l'invention, de préférence :
- le dispositif de rangement comprend en outre un dispositif de maintien présentant un état actif et un état inactif,
- le dispositif de maintien est apte à s'opposer à l'action du dispositif de sollicitation et maintenir le dispositif d'obturation en position fermée, lorsque le dispositif de maintien est dans l'état actif,
- le dispositif de maintien est dans l'état actif lorsque le masque respiratoire est hors du dispositif de rangement (en particulier lorsqu'il est porté par l'utilisateur, et
- le dispositif de maintien est dans l'état inactif lorsque l'équipement respiratoire est en position rangée.

Ainsi, les portes du dispositif de rangement vont être maintenus fermées lors de l'utilisation du masque respiratoire, ce qui évitera de détériorer le dispositif de rangement ou que les portes entravent l'utilisateur (pilote).

Selon une caractéristique complémentaire conforme à l'invention, le dispositif de maintien est de préférence sécable (le dispositif de maintien présente une zone de rupture localisée/une zone mécaniquement affaiblie) pour libérer le dispositif d'obturation, sous l'action de l'utilisateur exerçant une traction manuelle (environ 50 N) sur la porte.

Ainsi, en cas d'urgence ou de défaillance du dispositif de maintien l'équipement respiratoire ne risque pas de rester bloqué à l'intérieur du logement du dispositif de rangement.

Selon une autre caractéristique conforme à l'invention, de préférence l'élément de retenue inhibe le dispositif de sollicitation lorsqu'il coopère avec la partie de coopération.

Ainsi, l'élément de retenue ne bloquant pas la porte, mais l'action du dispositif de sollicitation, le risque que l'élément de retenue retienne la porte lorsque l'utilisateur souhaite faire sortir le masque respiratoire du logement (en cas de nécessité) est évité.

Selon une caractéristique complémentaire conforme à l'invention, la partie de coopération est de préférence liée au logement. En particulier, l'élément de retenue pourrait agir sur un élément mobile sur lequel l'élément de sollicitation vient prendre appui.

Selon une autre caractéristique conforme à l'invention, de préférence le dispositif de sollicitation présente un état actif et un état inactif, le dispositif de sollicitation est dans l'état actif lorsque l'équipement respiratoire est en position rangée, et l'élément de sollicitation est dans l'état inactif lorsque l'équipement respiratoire est hors du rangement.

Selon une autre caractéristique conforme à l'invention, la porte est de préférence montée pivotante sur le logement.

Selon encore une autre caractéristique conforme à l'invention, de préférence l'ensemble comprend en outre une vanne d'alimentation et un conduit d'alimentation de fluide s'étendant entre la vanne d'alimentation et le masque respiratoire, et l'ensemble respiratoire est adapté pour fermer la vanne d'alimentation lorsque la porte obture au moins partiellement l'ouverture et ouvrir ladite vanne d'alimentation lorsque la porte est à l'écart de l'ouverture.

Selon encore une autre caractéristique conforme à l'invention, la sangle est de préférence élastiquement extensible, plus préférentiellement apte à s'allonger élastiquement d'au moins 30%.

Afin de résoudre le problème précité présenté par un ensemble respiratoire du type décrit dans le document WO2013/064856A1, de manière complémentaire ou de manière alternative aux caractéristiques mentionnées ci-dessus, conformément à l'invention, la sangle comprend une branche principale s'étendant entre la partie de préhension et la partie de liaison et une branche de maintien s'étendant entre une partie de maintien fixée sur la coque et une partie centrale liée à la branche principale.

Dans le cas où il s'agit de caractéristiques alternatives pour résoudre le problème précité, l'équipement respiratoire comprend en outre un élément de retenue liée à une portion de retenue de la sangle. Dans cette hypothèse, l'élément de retenue de la sangle pourrait être retenu sur une partie de coopération soit du dispositif de rangement soit du masque respiratoire (par butée, système auto-agrippant libérable ou analogue), afin de maintenir en position rangée l'équipement respiratoire.

Ainsi, le risque que l'élément de retenue de la sangle soit correctement retenue sur la partie de coopération, mais qu'en fait l'équipement respiratoire n'est pas maintenu dans la position rangée correcte (positionnement satisfaisant du harnais par rapport au masque respiratoire) est réduit.

Selon une caractéristique complémentaire conforme à l'invention, de préférence la coque comprend un support périphérique supportant une lentille transparente et la partie de maintien est fixée au support périphérique.

Cette solution simple s'est avérée efficace pour s'assurer d'un positionnement satisfaisant de la sangle.

Selon une caractéristique encore complémentaire conforme à l'invention, de préférence le support périphérique comprend une partie de bord supérieur s'étendant au-dessus de la lentille transparente et la partie de maintien est fixée au support périphérique à proximité de la partie de bord supérieur.

Ainsi, la partie de la sangle incluant la branche principale et la branche de maintien va s'étendre entre le harnais et la partie de bord supérieur du support périphérique et permettra, en venant en appui sur le dessus de la tête de l'utilisateur de positionner le harnais verticalement par rapport à la tête de l'utilisateur.

Conformément à l'invention, de préférence l'ensemble respiratoire présente en outre les caractéristiques suivantes :
- la branche principale de la sangle présente entre la partie de liaison liée au harnais et la partie centrale une première distance,
- la branche de maintien présente entre la partie de maintien fixée sur la coque et la partie centrale une deuxième distance, et
- la deuxième distance est comprise entre la moitié et le double de la première distance.

Ainsi, le risque que l'équipement respiratoire ne sort pas placé dans une position satisfaisante dans le dispositif de rangement est encore réduit.

Conformément à l'invention, de préférence l'ensemble respiratoire présente en outre les caractéristiques suivantes :
- le harnais comprend un tube supérieur et un tube inférieur,
- la partie de liaison constitue une première partie de liaison reliée à une partie de connexion du tube gonflable supérieur,
- la sangle comprend en outre une branche secondaire comprenant une deuxième portion de liaison, la deuxième partie de liaison étant reliée à une partie de connexion du tube gonflable inférieur,
- la branche secondaire n'est pas fixée au tube gonflable supérieur.

Ainsi, le risque que tant le tube supérieur que le tube inférieur du harnais soit (mal) positionné dans la cavité respiratoire est réduit.

De manière complémentaire, conformément à l'invention, de préférence :
- la branche secondaire est liée à une partie intermédiaire de la branche principale,
- la partie intermédiaire est distante de la première partie de liaison d'une distance intermédiaire,
- la portion de retenue est distante de la première partie de liaison d'une longueur totale, et
- la distance intermédiaire est supérieure à 20% de la longueur totale.

Selon une autre caractéristique conforme à l'invention, de préférence le harnais comprend un tube extensible, la coque comprend un support périphérique supportant une lentille transparente, et le tube extensible est maintenu sur le support périphérique par une patte de maintien.

Le positionnement correct du harnais en position rangée est ainsi encore mieux assuré.

Selon une caractéristique complémentaire conforme à l'invention, de préférence le support périphérique comprend une partie de bord latéral, et la patte de maintien est fixée au bord latéral.

Selon une caractéristique encore complémentaire conforme à l'invention, de préférence la patte de maintien est flexible et a une longueur inférieure à 3 centimètres.

### Brève description des figures

D'autres caractéristiques et avantages de la présente invention apparaîtront dans la description détaillée suivante, se référant aux dessins annexés dans lesquels :
- FIG. 1 illustre en perspective une partie d'un ensemble respiratoire comprenant un équipement respiratoire et un dispositif de rangement, selon un premier mode de réalisation conforme à l'invention, lors d'une première étape de rangement,
- FIG. 2 illustre en vue en plan l'ensemble respiratoire, l'équipement respiratoire comportant un harnais placé dans une position de rangement sur un masque respiratoire, lors de l'insertion de l'équipement respiratoire dans le dispositif de rangement,
- FIG. 3 illustre l'équipement respiratoire avec le harnais placé dans la position de rangement sur le masque respiratoire et le masque respiratoire placé dans une position rangée dans le dispositif de rangement,
- FIG. 4 illustre l'équipement respiratoire sortant du dispositif de rangement,
- FIG. 5 illustre l'équipement respiratoire dans une position d'utilisation,
- FIG. 6 illustre une partie de l'équipement respiratoire suivant la flèche repérée VI à la figure 2,
- FIG. 7 illustre l'ensemble respiratoire suivant la flèche repérée VII à la figure 3,
- FIG. 8 illustre schématiquement le dispositif de rangement en perspective, lorsque l'équipement respiratoire n'est pas correctement rangé dans le dispositif de rangement,
- FIG. 9 illustre à plus grande échelle une partie de la figure 8,
- FIG. 10A et FIG 10B illustre deux variantes de réalisation d'un élément de retenue de l'équipement respiratoire,
- FIG. 11 représente en partie l'ensemble respiratoire suivant la flèche repérée XI à la figure 3 et illustre un dispositif de maintien dans un état actif,
- FIG. 12 illustre le dispositif de maintien conformément à la figure 11, dans état inactif,
- FIG. 13 illustre en perspective l'équipement respiratoire d'un ensemble respiratoire selon un deuxième mode de réalisation conforme à l'invention,
- FIG. 14 illustre l'ensemble respiratoire selon le deuxième mode de réalisation, conformément à la figure 7,
- FIG. 15 représente en partie l'ensemble respiratoire selon le deuxième mode de réalisation, conformément à la figure 11, et illustre un dispositif de maintien dans un état actif,
- FIG. 16 illustre le dispositif de maintien selon le deuxième mode de réalisation, conformément à la figure 12, dans état inactif,
- FIG. 17 représente schématiquement un ensemble respiratoire selon un troisième mode de réalisation conforme à l'invention, en coupe suivant la ligne repérée XVII à la figure 19, l'équipement respiratoire étant en position d'utilisation,
- FIG 18 représente schématiquement l'ensemble respiratoire selon le troisième mode de réalisation, l'équipement respiratoire étant en position rangée,
- FIG. 19 représente schématiquement le dispositif de rangement de l'ensemble respiratoire selon le troisième mode de réalisation, suivant la flèche repérée XIX à la figure 17.

### Description détaillée de l'invention

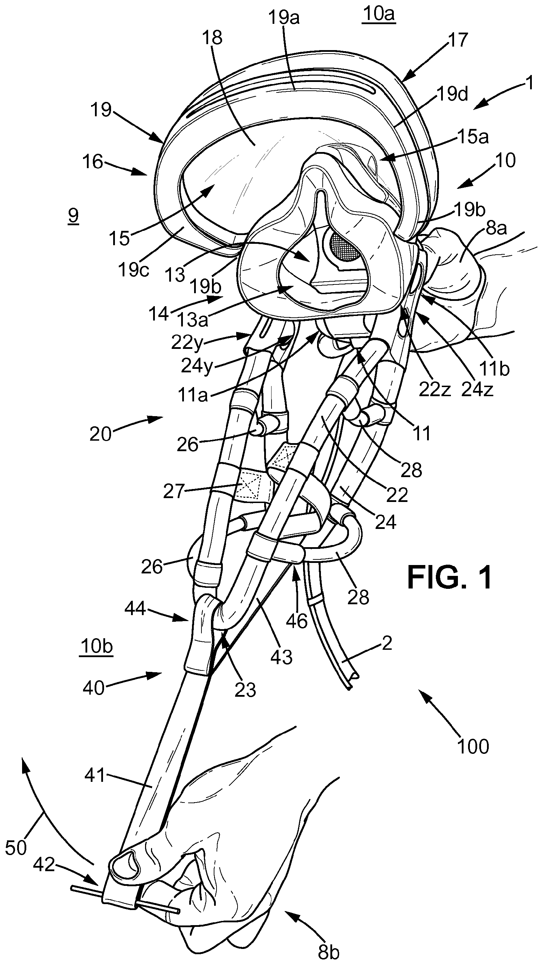

Les figures 1 à 12 illustrent un premier mode de réalisation d'ensemble respiratoire 1 placé dans une cabine 9 d'un avion et comprenant essentiellement un équipement respiratoire 100 et un dispositif de rangement 30.

L'équipement respiratoire 100 comporte un masque respiratoire 10, un harnais gonflable 20, une sangle 40 et un élément de retenue 70, 70', 70", 70"'.

Le masque respiratoire 10 représenté sur les figures. 1 à 5 comprend un support 11, un régulateur à la demande 1, une coque fixée au support 11 et une lentille transparente 18.

Le support 11 est rigide, supporte la coque, et forme un boîtier contenant le régulateur à la demande 12. Le support 11 comprend deux surfaces de préhension opposées 11a, 11b. Afin de maintenir le masque respiratoire 10, l'utilisateur 8 peut pincer le support 11 en appuyant sur les deux surfaces de préhension 11a, 11b. La surface de préhension 11a fait partie d'un levier qui peut tourner légèrement lorsqu'il est bien pressé.

Dans le mode de réalisation illustré, le masque respiratoire 10 comprend une pièce oronasale 14 et un écran protecteur des yeux 16 optionnel, l'écran protecteur des yeux 16 étant fixé de manière amovible sur la pièce oronasale 14. En variante, la pièce oronasale 14 et l'écran protecteur des yeux 16 pourrait constituer un ensemble indissociable.

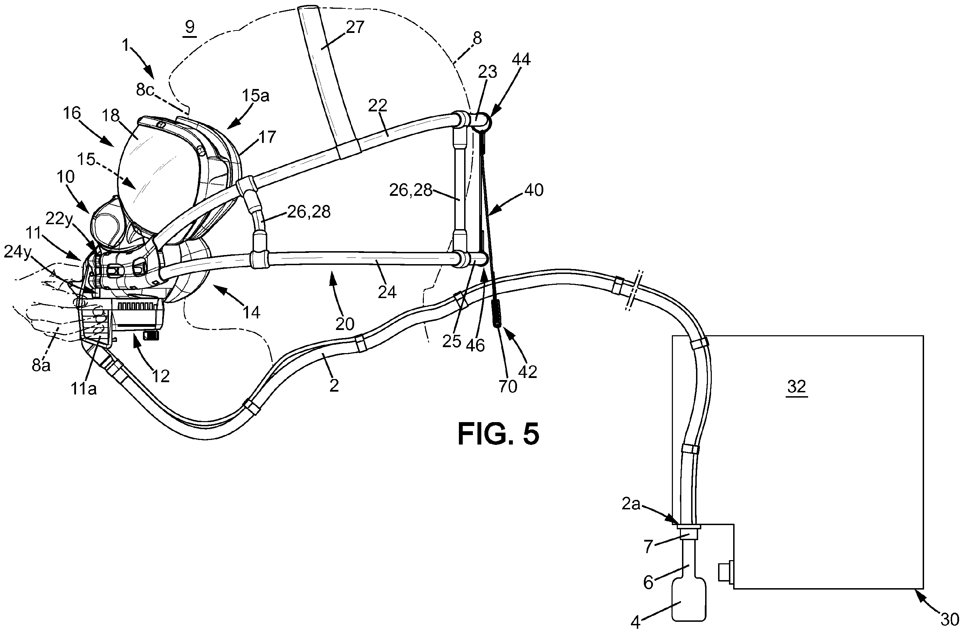

Comme le montrent en particulier les figures 1 et 5, l'écran de protection des yeux 16 comprend la lentille transparente 18 et un support périphérique 17 s'étendant autour de la lentille transparente 18 et supportant la lentille transparente 18. Le support périphérique 17 comporte un bord 19 comprenant une partie de bord supérieur 19a, une partie de bord inférieur 19b opposée à la partie de bord supérieur 19a et des parties de bord latéral 19c, 19d s'étendant entre la partie de bord supérieur 19a et le bord inférieur 19b.

La coque comprend la pièce oronasale 14 et le support périphérique 17.

Le masque respiratoire 10 a un côté avant 10a et un côté arrière opposé au côté avant 10a. Comme le montre la figure 1, la pièce oronasale 14 comprend une cavité 13 ayant une ouverture 13a dans le côté arrière 10b du masque respiratoire 10. L'écran de protection des yeux 16 comprend une cavité 15 ayant une ouverture 15a sur le côté arrière 10b du masque respiratoire 10. Dans le mode de réalisation, la cavité 15 de l'écran de protection des yeux 16 communique avec la cavité 13 de la pièce oronasale 14 lorsque l'écran de protection des yeux 16 est fixé sur la pièce oronasale 14. Dans la variante où la pièce oronasale 14 et l'écran protecteur des yeux 16 constituent un ensemble indissociable, la cavité 15 de l'écran de protection des yeux 16 et la cavité 13 de la pièce oronasale 14 communiquent en permanence l'une avec l'autre et généralement il n'existe pas de séparation entre la cavité 15 de l'écran de protection des yeux 16 et la cavité 13 de la pièce oronasale 14, de sorte qu'elles forment une unique cavité.

L'ouverture 15a est entourée par le support périphérique 17. Comme le montre la figure 5, le côté arrière 10b du masque respiratoire 10 est destiné à être appliqué de manière étanche sur un visage 8c d'un utilisateur 8 dans une position d'utilisation. Dans la position d'utilisation, la pièce oronasale 14 est appliquée de manière étanche sur le visage 8c de l'utilisateur 8 autour du nez et de l'embouchure de l'utilisateur 8, de sorte que l'utilisateur 8 respire, via l'ouverture 13a, le gaz respiratoire qui se trouve dans la cavité 13. De plus, dans la position d'utilisation, le support périphérique 17 est appliqué sur le visage 8c de l'utilisateur 8 autour des yeux, de sorte que l'ouverture 15a est fermée par le visage 8c de l'utilisateur 8. L'ouverture 15a s'étend sensiblement dans le plan de séparation s'étendant entre le côté avant 10a et le côté arrière 10b du masque respiratoire 10.

L'équipement respiratoire 1 comprend en outre un tube d'alimentation en gaz 2. Le tube d'alimentation en gaz 2 est flexible et comprend une extrémité amont 2a et une extrémité aval 2b. Le tube d'alimentation en gaz 2 est relié à l'extrémité amont 2a à une source de gaz respiratoire sous pression 4 (en particulier une source d'oxygène) par l'intermédiaire d'une ligne d'alimentation 6 et d'une vanne d'alimentation 7. L'extrémité aval 2b du tube d'alimentation en gaz 2 est reliée au régulateur 12, de sorte que la cavité 13 de la pièce oronasale 14 est alimentée en gaz respiratoire à travers le régulateur 12 en fonction de la demande de l'utilisateur qui respire.

Le harnais 20 comprend un tube gonflable supérieur 22 et un tube gonflable inférieur 24, chacun des tube gonflable supérieur 22 et tube gonflable inférieur 24 formant une boucle ayant une première extrémité 22y, 24y et une seconde extrémité 22z, 24z connectée au support 11. Comme représenté sur la figure 5, dans la position d'utilisation, chacun des tube gonflable supérieurs 22 et tube gonflable inférieur 24 entoure la tête de l'utilisateur 8. Le régulateur 12 comprend une soupape pour connecter sélectivement une chambre interne des tube gonflable supérieur 22 et tube gonflable inférieur 24 avec une source de gaz sous pression pour gonfler le harnais 20 lors de l'actionnement du levier comprenant la surface de préhension 11a ou à l'air ambiant de la cabine 9 pour dégonfler le harnais 20 lorsque le levier comprenant la surface de préhension 11a est relâché. Dans le mode de réalisation illustré, la source de gaz sous pression alimentant le tube gonflable supérieur 22 et le tube gonflable inférieur 24 est la source de gaz respiratoire 4 comme décrit par exemple dans le document WO99/58197. Dans une variante de réalisation, le tube gonflable supérieur 22 et le tube gonflable inférieur 24 peuvent être alimentés en gaz sous pression par une source autonome de gaz sous pression comme décrit par exemple dans le document WO2008/017630.

Le harnais 20 comprend en outre des éléments non gonflables formant des entretoises 26, 28, reliés chacun à une extrémité supérieure au tube gonflable supérieur 22, à l'écart des première extrémité 22y et seconde extrémité 22z du tube gonflable supérieur 22, et à une extrémité inférieure au tube gonflable inférieur 24, à l'écart des première extrémité 24y et seconde extrémité 24z du tube gonflable inférieur 24. Les entretoises 26, 28 sont en matériau élastique, tel qu'un matériau en caoutchouc ou en élastomère. De préférence, les entretoises 26, 28 ont une forme tubulaire de section circulaire en coupe transversale.

Le harnais 20 comprend en outre une sangle latérale 27 reliée à chacune de ses deux extrémités au tube gonflable supérieur 22. La sangle latérale 27 s'étend sur la tête de l'utilisateur 8 dans la position d'utilisation.

La sangle 40 comprend une partie de préhension 42, une portion de retenue 48, une première partie de liaison 44 reliée à une partie de connexion 23 du tube gonflable supérieur 22 et une seconde partie de liaison 46 reliée à une partie de connexion 25 du tube gonflable inférieur 24.

La sangle 40 comprend une branche principale 41 et une branche secondaire 43. La branche principale 41 s'étend de la portion de retenue 48 à la première partie de liaison 44. Dans le premier mode de réalisation, illustrée aux figures 1 à 12, la branche secondaire 43 s'étend de la première partie de liaison 44 à la deuxième partie de liaison 46, autrement dit la deuxième partie de liaison 46 est reliée à la portion de retenue 48 par l'intermédiaire de la branche secondaire 43, puis de la branche principale 41. Plus précisément, la partie de préhension 42 et/ou la portion de retenue 48 forment une extrémité libre de la sangle 40, la seconde partie de liaison 46 forme une extrémité opposée de la sangle 40 et la première partie de liaison 44 est intermédiaire entre la partie de préhension 42 et/ou la portion de retenue 48 et la seconde partie de liaison 46 de la sangle 40. En variante, la branche secondaire 43 pourrait s'étendre de la deuxième partie de liaison 46 à la portion de retenue 48, de sorte que la deuxième partie de liaison 46 serait reliée à la portion de retenue 48 indépendamment de la branche principale 41.

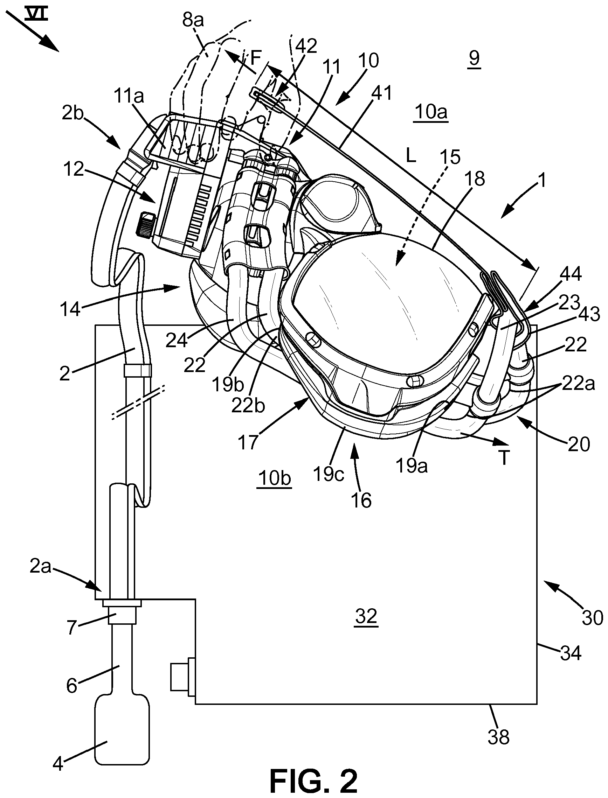

La sangle 40 est avantageusement extensible élastiquement, de sorte que l'utilisateur 8 peut exercer facilement une tension T sur le harnais 20 en exerçant une force de traction sur la partie de préhension 42 de la sangle 40, comme illustré par la flèche F sur la figure 2.

La première partie de liaison 44 est reliée au tube gonflable supérieur 22 sensiblement au milieu du tube gonflable supérieur 22 entre la première extrémité 22y et la seconde extrémité 22z, la partie de connexion 23 étant sensiblement au sommet de la boucle formée par le tube gonflable supérieur 22. La deuxième partie de liaison 46 est reliée au tube gonflable inférieur 24 sensiblement au milieu du tube gonflable inférieur 24 entre la première extrémité 24y et la seconde extrémité 24z, la partie de connexion 25 étant sensiblement au sommet de la boucle formée par le tube gonflable inférieur 24. Ainsi, la force de traction F exercée sur la sangle 40 provoque une tension T sensiblement uniforme sur les tubes gonflables supérieur 22 et inférieur 24.

Le dispositif de rangement 30 comporte un logement 32 délimité par une paroi arrière 38 et une paroi périphérique 34. Dans le premier mode de réalisation, illustré sur les figures 1 à 12, la paroi arrière 38 est destinée à reposer sur le plancher de la cabine 9, de sorte que la paroi arrière 38 forme le fond du logement 32. Le logement 32 est en communication avec l'air ambiant de la cabine 9 par une ouverture 36 à l'opposé de la paroi arrière 38.

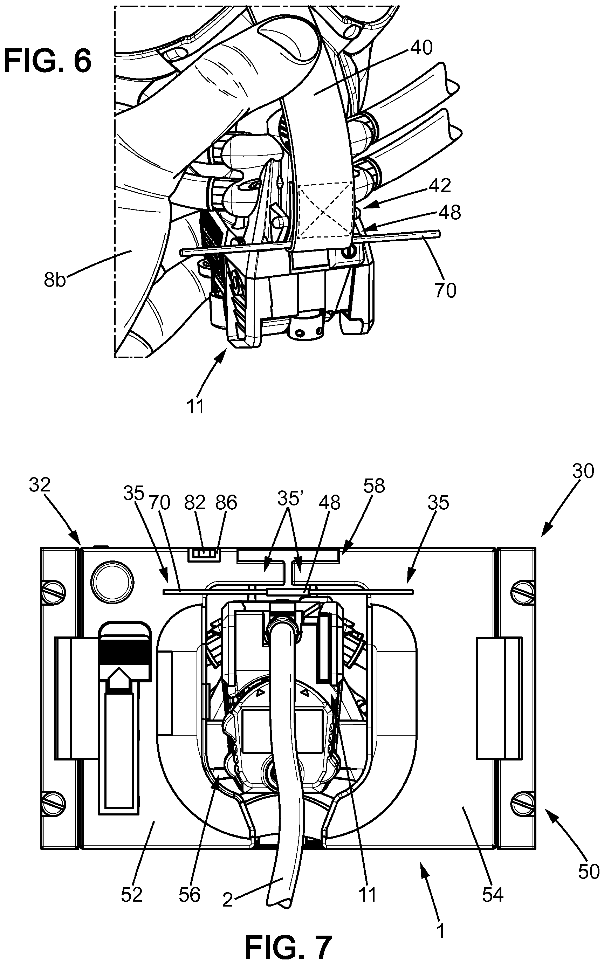

Dans le premier mode de réalisation, représenté sur les figures 1 à 12, le dispositif de rangement 30 définit une boîte de rangement. Le dispositif de rangement 30 comprend un dispositif d'obturation 50 ayant au moins une porte, de préférence deux portes 52, 54, articulées par rapport au logement 32 entre une position ouverte et une position fermée, pour fermer sélectivement l'ouverture 36. Les portes 52, 54 présentent chacune une face interne 52a, 54a et une face externe 52b, 54b. Les portes 52, 54 sont globalement planes et présentent un contour 55. De préférence, les portes comprennent un passage 56 à travers lequel s'étend le support 11 lorsque l'équipent respiratoire est dans la position rangée, de sorte que l'utilisateur peut saisir le support 11 du masque respiratoire 10 sans ouvrir les portes 52, 54, tel qu'illustré à la figure 7. Lorsque les portes 52, 54 sont fermées, la vanne d'alimentation 7 est fermée. Lorsque l'une et/ou l'autre des portes 52, 54 est ouverte, la vanne d'alimentation 7 est automatiquement ouverte pour alimenter le masque respiratoire 10.

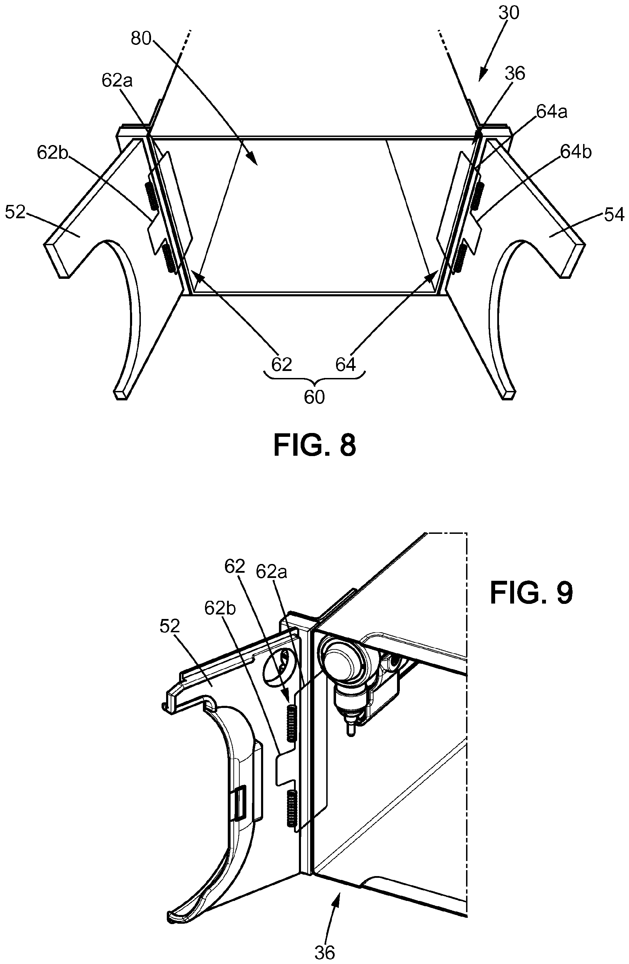

Le dispositif de rangement 30 comprend en outre un dispositif de sollicitation 60. Le dispositif de sollicitation 60 vient en remplacement ou en complément du système à ressort bi-stable permettant habituellement de maintenir les portes 52, 54 en position ouverte ou en position fermée. Le dispositif de sollicitation 60 sollicite chacune des portes 52, 54 vers la position ouverte. Dans le mode de réalisation illustré, le dispositif de sollicitation 60 comprend un ressort 62, 64, de préférence un ressort de torsion, pour chacune des portes 52, 54, tel qu'illustré en particulier aux figures 8 et 9, Chaque ressort 62, 64 comprend une première portion 62a, 64a venant en appui contre le logement 32 et une deuxième partie 62b, 64b venant en appui contre la porte respective 52, 54.

L'ensemble respiratoire 1 comprend en outre un élément de retenue 70 maintenue à une portion de retenue 48 de la sangle 40. La portion de retenue 48 est de préférence disposée à proximité de la partie de préhension 42. Dans le premier mode de réalisation, illustré aux figures 1 à 9, la partie de préhension 42 est disposée entre la portion de retenue 48 et la première partie de liaison 44. En variante, la portion de retenue 48 pourrait être disposée entre la partie de préhension 42 et la première partie de liaison 44.

Afin de ranger le masque respiratoire 10 dans le dispositif de rangement 30, comme représenté sur la figure 1, d'abord, l'utilisateur 8 maintient le support 11 avec une première main 8a et tire sur la sangle 40, par la partie de préhension 42 (ou la portion de retenue 48) avec une seconde main 8b. Ainsi, l'utilisateur 8 pince le support 11 avec la première main 8a en appuyant sur les surfaces opposées 11a, 11b sur le côté avant 10a du masque respiratoire 10, pince la partie de préhension 42 (ou la portion de retenue 48) de la sangle 40 sur le côté arrière 10b du masque respiratoire 10 et déplace ses deux mains à l'opposée l'une de l'autre. Par conséquent, l'utilisateur 8 tire simultanément sur la partie de connexion 23 du premier tube gonflable 22 (via la branche principale 41 de la sangle 40) et sur la partie de connexion 25 du second tube gonflable 24 de l'équipement respiratoire 100 (via la branche secondaire 43 de la sangle 40) à l'écart du masque respiratoire 10 et en particulier à respectivement l'écart de la cavité 15 de l'écran de protection des yeux 16 et de la cavité 13 de la pièce oronasale 14.

Ensuite, la deuxième main 8b de l'utilisateur 8 suit un mouvement de préférence sensiblement semi-circulaire allant au-dessus du masque respiratoire 10 en tirant sur les parties de connexion 23, 25 du harnais 20. Par conséquent, l'utilisateur 8 tire successivement sur la partie de préhension 42 de la sangle 40 loin de la face avant 10a, au-dessus du bord supérieur 19a et ensuite du côté avant 10a près du support 11.

La branche principale 41 de la sangle 40 a une longueur entre la partie de préhension 42 et la première partie de liaison 44 qui est suffisamment longue pour permettre de placer la partie de préhension sur le support 11 lorsque le harnais 20 est en position de rangement. De même, la branche secondaire 43 de la sangle 40 a une longueur entre la première partie de liaison 44 et la deuxième partie de liaison 46 qui est suffisamment longue pour permettre de placer la partie de préhension 42 sur le support 11 lorsque le harnais 20 est en position de rangement.

Ainsi, comme le montre la figure 2, l'utilisateur 8 tire alors sur la partie de préhension 42 de la sangle 40 et maintient le support 11 avec la même main 8a. Le harnais 20 est donc dans une position de rangement dans laquelle deux parties supérieures d'appui 22a du tube gonflable supérieur 22 reposent sur la partie de bord supérieur 19a de l'écran de protection des yeux 16 et deux parties inférieures d'appui 22b du tube gonflable supérieur 22 reposent sur le La partie de bord inférieur 19b de l'écran de protection des yeux 16. Pour une question de lisibilité, à la figure 6, la deuxième main 8b a été légèrement déplacée.

L'utilisateur 8 exerce la force de traction F sur la branche principale 41 de la sangle 40 qui provoque la tension T exercée sur le harnais 20 entre les parties supérieures d'appui 22a et les parties inférieures d'appui 22b du tube gonflable supérieur 22, empêchant ainsi le tube gonflable supérieur 22 de pénétrer dans la cavité 15.

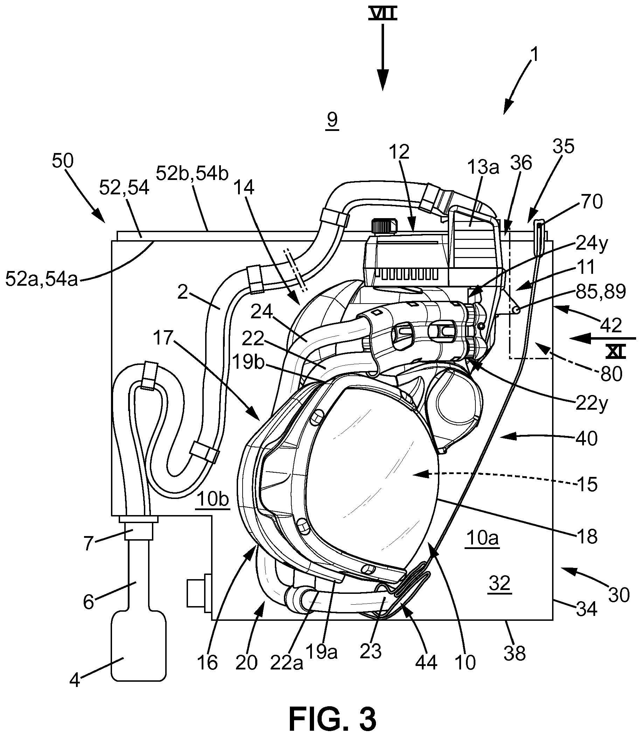

Sur les figures 2 et 3, les parties supérieures d'appui 22a du tube gonflable supérieur 22 sont montrées légèrement éloignées du bord supérieur 19a de l'écran de protection des yeux 16 afin de rendre la représentation plus compréhensible. Mais en fait, les parties supérieures d'appui 22a du tube gonflable supérieur 22 reposent sur la partie de bord supérieur 19a de l'écran de protection des yeux 16.

Ensuite, l'utilisateur 8 insère le masque respiratoire 10 dans le logement 32 du dispositif de rangement 30 tout en tirant sur la sangle 40 pour maintenir le harnais 20 dans la position de rangement et place l'équipement respiratoire 100 dans la position rangée représenté sur la figure 3.

Dans le premier mode de réalisation, représenté sur les figures 1 à 12, la paroi arrière 38 étant la paroi inférieure du logement 32, lorsque le masque respiratoire 10 se trouve dans la position rangée, l'écran de protection des yeux 16 du masque respiratoire 10 repose sur la paroi arrière 38 du logement 32 par l'intermédiaire des parties supérieures d'appui 22a du tube gonflable supérieur 22 qui est maintenu entre le bord supérieur 19a du masque respiratoire 10 et la paroi arrière 38.

Comme représenté sur la figure 3, l'équipement respiratoire 100 est rangé dans le logement 32 du dispositif de rangement 30 dans la position rangée et le harnais 20 est maintenu dans la position de rangement sur le masque respiratoire 10.

Puis, l'utilisateur 8 referme les portes 52, 54 et vient placer l'élément de retenue 70 contre une partie de coopération 35 du dispositif d'obturation 30. Dans le premier mode de réalisation, illustré aux figures 1 à 12, l'élément de retenue 70 est une tige. La partie de coopération 35 s'étend sur la face externe 52b, 54b de chacune des portes 52, 54. La branche principale 41 de la sangle 40, en particulier la partie de préhension 42, s'étend à travers le passage 56.

L'élément de retenue 70 maintient ainsi les portes 52, 54 fermées à l'encontre de l'action des ressorts 62, 64, grâce à la branche principale 41 et la branche secondaire 43 de la sangle 40 qui sont tendues et maintenue à leur extrémité opposée (première partie de liaison 44 et deuxième partie de liaison 46) au harnais 20, tel qu'illustré à la figure 7.

Tel qu'illustré à la figure 8, si l'élément de retenue 70 n'est pas positionné contre la partie de coopération 35 du dispositif d'obturation 30, les portes 52, 54 sont ouvertes sous l'action du dispositif de sollicitation 60.

La distance entre la première partie de liaison 44, par laquelle la sangle 40 est liée au tube gonflable supérieur 22 du harnais 20 et la portion de retenue 48 par laquelle la sangle 40 retient les portes 52, 54 fermées via l'élément de retenue 70, autrement dit la longueur de la branche principale 41 de la sangle 40, doit être suffisamment courte pour éviter que l'élément de retenue 70 puisse être en contact de la partie de coopération 35, alors que le tube gonflable supérieur 22 du harnais 20 n'est pas correctement positionnée par rapport au masque respiratoire 10 et en particulier par rapport à la cavité 15. Dans le premier mode de réalisation, illustré aux figures 1 à 12, la distance entre la deuxième partie de liaison 46, par laquelle la sangle 40 est liée au tube gonflable inférieur 24 du harnais 20 et la première partie de liaison 44 par laquelle la branche secondaire 43 de la sangle 40 est liée à la branche principale 41 de la sangle 40 doit être suffisamment courte pour éviter que le tube gonflable inférieur 24 du harnais 20 ne soit pas correctement positionné par rapport au masque respiratoire 10 et en particulier par rapport à la cavité 13.

En variante, au lieu d'un simple contact entre l'élément de retenue 70 et la partie de coopération 35, on pourrait prévoir un système de clippage. De préférence, la forme et la couleur de l'élément de retenue 70 et de la partie de coopération 35 se correspondent pour aider l'utilisateur.

Lorsque requis, l'utilisateur 8 saisit le masque respiratoire 10 par le support 11 et tire le masque respiratoire 10 vers lui à travers l'ouverture 36. La tension dans la sangle 40 décroit, laissant ainsi les portes 52, 54 s'ouvrir.

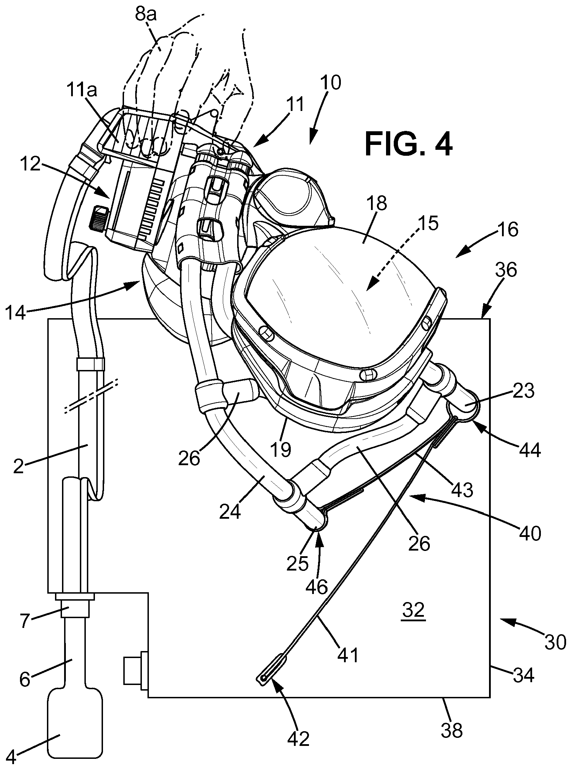

Dans le mode de réalisation illustré, l'utilisateur 8 fait ensuite pivoter le masque respiratoire 10 en tirant le masque respiratoire 10 vers lui, tel que représenté à la figure 4. Le harnais 20 se déploie progressivement et tombe en raison de la gravité. Ainsi, le tube gonflable inférieur 22 et le tube gonflable inférieur 24 du harnais 20 sont maintenus à l'écart respectivement de la cavité 15 de l'écran de protection des yeux 16 et de la cavité 13 de la pièce oronasale 14.

Puis, l'utilisateur 8 appuie sur le levier comprenant la surface de préhension 13a pour gonfler le harnais 20 et ensuite l'utilisateur applique le masque respiratoire 10 sur son visage 8c, dans une position d'utilisation. Dans la position d'utilisation, l'ensemble du dispositif de retenue 40 est libéré du masque respiratoire 10.

Comme le montre la figure 5, en position d'utilisation, la sangle 40 est encore fixée au harnais 20, la partie de la branche secondaire 43 de la sangle 40 entre la première partie de liaison 44 et la seconde partie de liaison 46 s'étendant en regard de l'arrière de la tête d'utilisateur et étant légèrement tendue. La branche principale 41 de la sangle 40, entre la première partie de liaison 44 et la partie de préhension 42, est accrochée à partir de la partie de connexion 23 du premier tube gonflable 22 à l'extérieur de la partie de la branche secondaire 43 de la sangle 40 entre la première partie de liaison 44 et la seconde partie de liaison 46 .

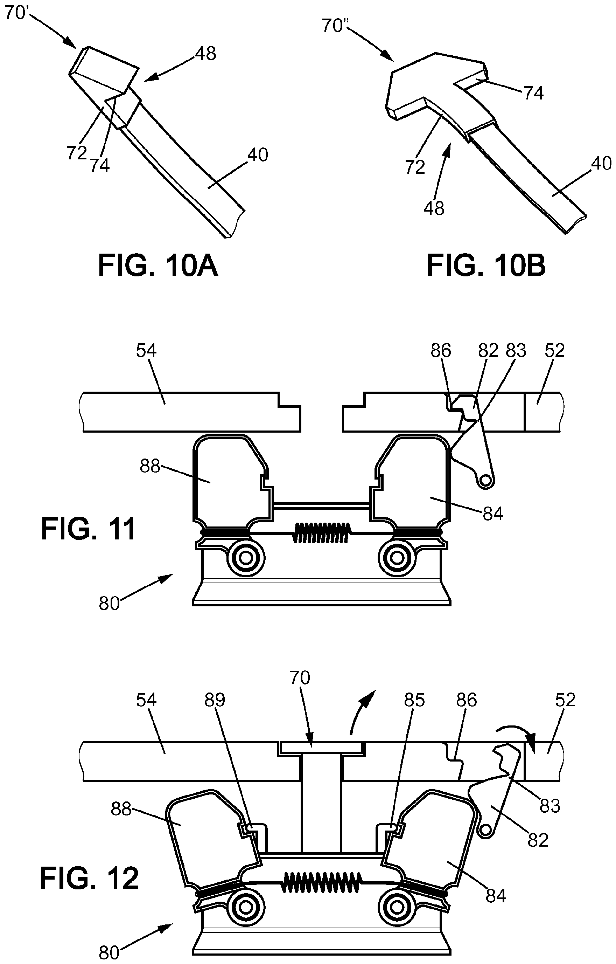

Les figures 10A et 10B illustre deux variantes d'élément de retenue constitué par des crochets 70', 70". Les crochets 70', 70" comprennent une âme 72 et une surface d'arrêt 74 s'étendant sensiblement perpendiculairement à l'âme 72. Lorsque l'équipement respiratoire 100 est en position rangée, l'âme 72 s'étend à travers un passage et la surface d'arrêt 74 est en appui sur une partie de coopération 35', illustrée sur la figure 7, située la face externe 52b, 54b des portes 52, 54. Le passage est formé par une découpe en creux dans son contour 55 définissant une encoche 58.

L'avantage d'avoir la partie de coopération 35, 35' s'étendant sur les deux portes 52, 54 est que le test dit Press-To-Test ne peut être réalisé que lorsque les portes sont refermées.

Mais, en variante, conformément à l'invention, la partie de coopération peut ne s'étendre que sur la porte 54 droite, afin en particulier de ne réaliser le passage qu'à travers une seule porte 54.

Les figures 11 et 12 illustrent, un dispositif de maintien 80 permettant d'éviter que les portes 52, 54 soient continuellement ouvertes lors de l'utilisation de l'ensemble respiratoire 100. Le dispositif de maintien 80 comprend un crochet 82 et un élément d'actionnement 84.

Tel qu'illustré à la figure 11, lorsque le masque respiratoire 10 est hors du logement 32, un crochet 82 est en positon active et retient la porte 52 en position fermée, une surface de butée 86 de la porte 52 venant en butée contre le crochet 82. En variante, un autre élément d'actionnement 88 pourrait retenir de manière similaire la porte 54 en position fermée par l'intermédiaire d'un autre crochet et d'une surface de butée de la porte 54.

Un bouton (non représenté) situé sur la face externe 52b de la porte 52, ou une action directe sur le crochet 82, permet d'amener le crochet 82 dans une position inactive, tel qu'illustré à la figure 12, de sorte que la porte 52 s'ouvre pour permettre le rangement du masque respiratoire 10.

En outre, tel qu'illustré à la figure 12, la présence du masque respiratoire 10 dans le logement 32 provoque la rotation des éléments d'actionnement 84 et 88, amenant le crochet 82 en position inactive dans laquelle il est à l'écart de la surface de butée 86 de la porte 52. Comme décrit précédemment, l'élément de retenue 70 permet alors de maintenir les portes 52, 54 en position fermée.

Dans le premier mode de réalisation, illustré aux figures 1 à 12, les éléments d'actionnement 84, 88 font partie d'un verrou, connu en soi, coopérant avec des ergots 85, 89 solidaires du support 11 du masque respiratoire, les ergots 85, 89 s'engageant entre les éléments d'actionnement 84 et 88 pour maintenir le masque respiratoire 10 en position rangée dans le logement 32.

D'autre part, le crochet 82 présente avantageusement une zone fusible 83 permettant de rompre le crochet 82 afin de s'assurer qu'en cas d'urgence, en exerçant un effort important sur la porte 52, la porte 52 pourra s'ouvrir.

Selon une variante de réalisation, au lieu d'agir sur la porte 52 le dispositif de maintien 80 pourrait agir sur le dispositif de sollicitation 60.

En particulier, le dispositif de maintien 80 pourrait agir sur la deuxième partie 62b, 64b des ressorts 62, 64 pour inhiber le dispositif de maintien 80 en l'empêchant de pousser contre la porte respective 52, 54. Ainsi, le crochet 82 pourrait venir retenir la deuxième partie 62b, 64b des ressorts 62, 64 lorsqu'il est en position active et laisser la deuxième partie 62b, 64b des ressorts 62, 64 pousser les portes 52, 54 vers la position ouverte lorsque le crochet 82 est en position inactive. Cette solution présenterait notamment l'avantage de réduire le risque que les portes 52, 54 ne s'ouvrent pas lorsque l'utilisateur doit mettre le masque respiratoire 10.

En alternative, le dispositif de maintien 80 pourrait agir sur la première partie 62a, 64a des ressorts 62, 64 en libérant la première partie 62a, 64a des ressorts 62, 64 par rapport au logement 32. On pourrait par exemple prévoir un élément intermédiaire entre la première partie 62a, 64a des ressorts 62, 64 et le logement 32, cet élément intermédiaire étant mobile et/ou escamotable.

Selon une autre variante de réalisation, au lieu du dispositif de maintien 80, c'est l'élément de retenue 60 qui pourrait agir sur le dispositif de sollicitation 60. Ainsi, la partie de coopération 35 au contact de laquelle vient le dispositif de sollicitation 60 pourrait être situé sur le dispositif de sollicitation 60 au lieu du dispositif d'obturation 50.

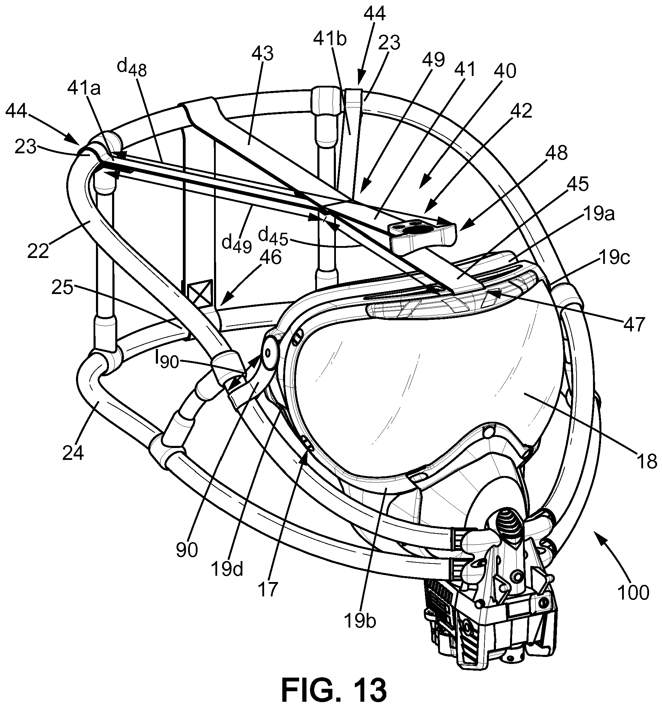

Les figures 13 à 16 illustrent un deuxième mode de réalisation, le deuxième mode de réalisation se distingue du premier mode de réalisation d'une part en ce qui concerne essentiellement l'équipement respiratoire 100 et d'autre part en ce qui le dispositif de maintien 80 de manière indépendante.

Tel qu'illustré en particulier à la figure 13 dans le deuxième mode de réalisation, la branche secondaire 43 de la sangle 40 est liée à une partie intermédiaire 49 de la branche principale 41, la partie intermédiaire 49 étant distincte de la première partie de liaison 44. Plus précisément, la partie intermédiaire 49 est distante de la première partie de liaison 44 d'une distance intermédiaire d₄₉. La branche secondaire 43 de la sangle 40 s'étend de la partie intermédiaire 49 à la deuxième partie de liaison 46 sans être liée au tube gonflable supérieur 22. Toutefois, pour éviter que la deuxième partie de liaison 46 exerce une pression sur la tête de l'utilisateur lorsque le masque respiratoire 10 est porté par l'utilisateur, la branche secondaire 43 de la sangle 40 vient en appui sur le tube gonflable supérieur 22, autrement dit la branche secondaire 43 de la sangle 40 contourne (repose sur) le tube gonflable supérieur 22.

La branche principale 41 s'étend entre la partie de connexion 23 au tube gonflable supérieur 22 et la portion de retenue 48 sur une longueur totale d₄₈. La distance intermédiaire d₄₉ est supérieure à 20% de la longueur totale d₄₈. Avantageusement, la distance intermédiaire d₄₉ est sensiblement égale à la longueur totale d₄₈.

D'autre part, la sangle du harnais 20 comprend en outre une branche de maintien 45 s'étendant entre une partie de maintien 47 et une partie centrale liée à la branche principale 41. La partie de maintien 47 est fixée sur le support périphérique 17, plus précisément au-dessus de la lentille transparente 18, sur le bord supérieur 19a.

Dans le deuxième mode de réalisation illustré, la partie centrale est constituée par la partie intermédiaire 49. En variante, la partie centrale pourrait être distante de la partie intermédiaire 49, autrement dit la partie de la branche principale 41 à laquelle la branche de maintien 45 est fixée pourrait être distincte de la partie de la branche principale 41 à laquelle la branche secondaire 43 est fixée.

La branche de maintien 45 présente entre la partie de maintien 47 et la partie intermédiaire 49 une longueur d₄₅. La longueur d₄₅ est de préférence comprise entre la moitié et le double de la distance intermédiaire d₄₉, avantageusement la longueur d₄₅ est sensiblement égale à la distance intermédiaire d₄₉.

Par ailleurs, dans le deuxième mode de réalisation, la sangle 40 comprend deux parties de connexion 23 au tube gonflable supérieur 22, la branche principale 41 de la sangle 40 se divisant en deux sous-branches 41a, 41b entre la partie intermédiaire 49 et les parties de connexion 23. Les deux sous-branches 41a, 41b forment entre elles un angle avantageusement compris entre 45 degrés et 120 degrés.

En outre et de manière indépendante, le tube gonflable supérieur 22 est maintenu sur les parties de bord latéral 19c 19d par deux pattes de maintien 90. Chaque patte de maintien 90 est fixée à une parties de bord latéral 19c 19d et fait une boucle autour du tube gonflable supérieur 22, afin de permettre un coulissement du tube gonflable supérieur 22, lors de son extension suite au gonflable. De préférence, les pattes de maintien 90 sont flexibles et réalisées en thermoplastique élastomère, caoutchouc, silicone ou analogue. La longueur l90 des pattes de maintien 90 est de préférence inférieure est 3 centimètres, avantageusement de l'ordre de 2 centimètres.

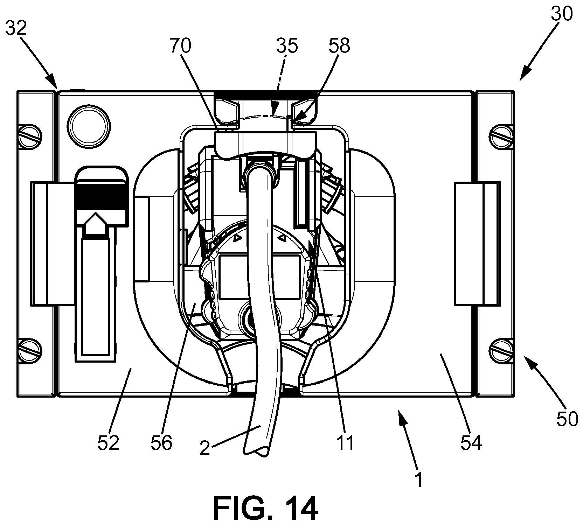

Tel qu'illustré à la figure 14, le passage 58 communique avec le passage 56 et présente une largeur au moins égale à la largeur de la sangle 40 au niveau de la portion de retenue 48. Ainsi, après avoir placé l'équipement respiratoire 100 dans le logement 32 en tenant le support 11 et la partie de préhension 42 de la sangle 40 ou l'élément de retenue 70 avec la main 8a, l'utilisateur ferme les portes 52, 54 avec la main 8b. Tel qu'illustré en trait fort à la figure 14, l'élément de retenue 70 et la portion de retenue 48 de la sangle 40 sont alors dans le passage 56. Puis, l'utilisateur relâche le support 11 et déplace l'élément de retenue 70 à travers le passage 58 jusqu'à amener la surface d'arrêt 74 de l'élément de retenue 70 en regard de la partie de coopération 35, tel qu'illustré en trait mixte. L'utilisateur peut alors libérer l'élément de retenue 70.

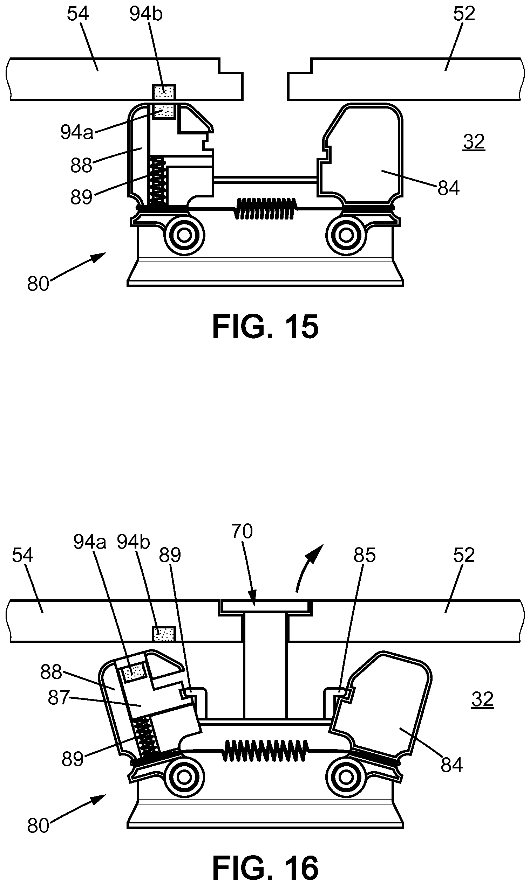

Tel qu'illustré à la figure 16, dans le deuxième mode de réalisation, la partie de coopération 35 est placée au fond d'un creux (renfoncement) de forme complémentaire de la surface d'arrêt 74 de l'élément de retenue 70.

Tel qu'illustré à la figure 14, le passage 56 entre les portes 52, 54 s'étend à l'écart du support 11, en ménageant un jour de l'ordre d'environ un centimètre pour éviter que les portes 52, 54 restent fermées par coincement du support 11 entre les portes 52, 54.

Tel qu'illustré aux figures 15 et 16, le dispositif de maintien 80 selon le deuxième mode de réalisation se distingue du dispositif de maintien selon le premier mode de réalisation en ce que le crochet 82 destiné à coopérer avec la surface de butée 86 et actionné par l'élément d'actionnement 84 est remplacé par un premier aimant 94a destiné à coopérer avec un deuxième aimant 94b et monté coulissant dans l'élément d'actionnement 88 entre une position active illustrée à la figure 15 et une position inactive illustrée à la figure 16.

L'élément d'actionnement 88 comprend un coulisseau 87 sollicité par un ressort 89 vers une position avancée. Lorsque le coulisseau 87 est en position avancée et que la porte 54 est fermée, le premier aimant 94a est à proximité du deuxième aimant 94b, retenant ainsi la porte 54 en position fermée par attraction magnétique entre le premier aimant 94a et le deuxième aimant 94b, à l'encontre de l'action du ressort 64.

Lorsque l'équipement respiratoire 100 est en position d'utilisation à l'extérieur du logement 32, le coulisseau 87 sollicité par le ressort 89 est en position avancée, de sorte que le premier aimant 94a est en position active, à distance du deuxième aimant 94b, permettant ainsi de maintenir la porte 54 en position fermée.

Lorsque l'équipement respiratoire 100 est insérée dans le logement 32 pour l'amener en position rangée, les ergots 85, 89 du masque respiratoire 10 viennent au contact des éléments d'actionnement 84, 88 et en particulier du coulisseau 87 qui se retrouve amené à reculer à l'encontre de l'action du ressort 89.

Tel qu'illustré à la figure 16, lorsque le coulisseau 87 est en position reculée, le premier aimant 94a est en position inactive en retrait à l'intérieur de l'élément d'actionnement 88, à distance de de sorte que le positionnement de l'élément de retenue 70 contre la partie de coopération 35 est nécessaire pour retenir les portes 52, 54 fermées à l'encontre de la sollicitation des ressorts 62, 64.

Il sera noté que lorsque la porte 54 est en position fermée, elle est adaptée pour maintenir la porte 52 en position fermée par un rebord de retenue (non représenté) ou analogue.

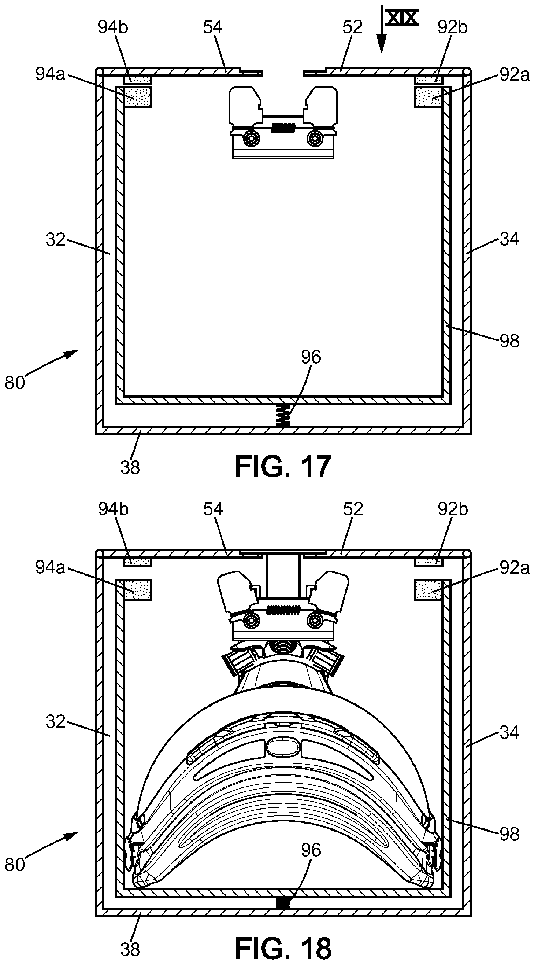

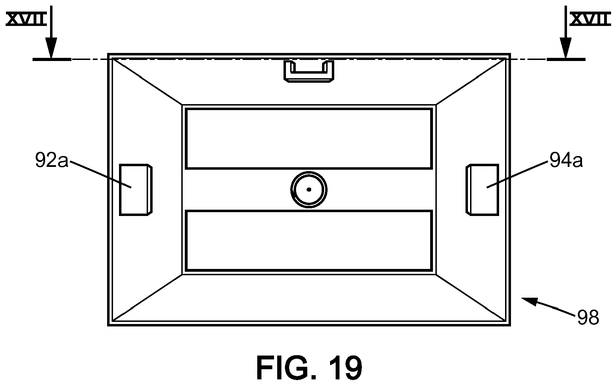

Le troisième mode de réalisation illustré aux figures 17 à 19 se distingue du premier mode de réalisation et du deuxième mode de réalisation en ce qui concerne le dispositif de maintien 80. Pour les autres caractéristiques, l'ensemble respiratoire du troisième mode de réalisation peut reprendre les caractéristiques du premier mode de réalisation et/ou du deuxième mode de réalisation.

Selon le troisième mode de réalisation, le dispositif de maintien 80 comprend un caisson 98 monté coulissant à l'intérieur du logement 32 entre une position avancée illustrée à la figure 17 et une position reculée illustrée à la figure 18.

Le caisson 98 est sollicité vers la position avancée par un ressort 96. Le dispositif de maintien 80 comprend en outre une première paire d'aimants 92a, 94a montés sur le caisson 98 et une deuxième paire d'aimants 94a, 94b montés respectivement sur les portes 52, 54.

Lorsque le coulisseau 98 est en position avancée la première paire d'aimant 92a, 94a est en position active. Lorsque les portes 52, 54 sont fermées, et que la première paire d'aimant 92a, 94a est en position active, la première paire d'aimant 92a, 94a est à proximité de la deuxième paire d'aimants 92b, 94b, retenant ainsi respectivement les portes 52, 54 en position fermée par attraction magnétique entre chacun des aimants de la première paire d'aimants 92a, 94a et l'aimant correspondant de la deuxième paire d'aimants 92b, 94b.

Lorsque l'équipement respiratoire 100 est en position d'utilisation à l'extérieur du logement 32, le coulisseau 98 sollicité par le ressort 96 est en position avancée, de sorte que la première paire d'aimant 92a, 94a est en position active, permettant ainsi de maintenir les portes 52, 54 en position fermée.

Lorsque l'équipement respiratoire 100 est inséré dans le logement 32 pour l'amener en position rangée, le coulisseau 98 se retrouve amené à reculer en position inactive, sous l'action de la pesanteur qui tend à comprimer le ressort 96.

Tel qu'illustré à la figure 18, lorsque le coulisseau 98 est en position reculée, la première paire d'aimants 92a, 94a est en position inactive en retrait, à distance de la deuxième paire d'aimants 92b, 94b, de sorte que le positionnement de l'élément de retenue 70 contre la partie de coopération 35 est nécessaire pour retenir les portes 52, 54 fermées à l'encontre de la sollicitation des ressorts 62, 64.

Tel qu'illustré à la figure 16, lorsque le coulisseau 87 est en position inactive, le premier aimant 94a est en retrait à l'intérieur de l'élément d'actionnement 88, de sorte que le positionnement de l'élément de retenue 70 contre la partie de coopération 35 est nécessaire pour retenir les portes 52, 54 fermées à l'encontre de la sollicitation des ressorts 62, 64.

Bien entendu l'invention n'est nullement limitée au(x) mode(s) de réalisation décrit(s) à titre illustratif, non limitatif. Ainsi, au lieu d'être montées pivotantes sur le logement 32, les portes 52, 54 pourraient coulisser par rapport au logement 32.

## Revendications

1. Ensemble respiratoire (1) pour aéronef comprenant :
- un équipement respiratoire (100) destiné à fournir un gaz respiratoire à un utilisateur comportant :
• un masque respiratoire (10), le masque respiratoire comprenant un support rigide (11) et une coque (14, 17) liée au support rigide (11), la coque (14, 17) présentant une cavité respiratoire (13, 15) et étant adaptée pour s'appliquer sur le visage de l'utilisateur autour de la bouche et du nez de l'utilisateur,
• un harnais (20) gonflable, adapté pour s'étendre autour de la tête de l'utilisateur à l'opposé de la coque (26), afin de maintenir la coque (26) sur le visage de l'utilisateur,
• une sangle (40) présentant une partie de préhension (42) et une partie de liaison (44), la partie de liaison (44) étant liée au harnais (20),
- un dispositif de rangement (30) comportant :
• un logement (32) adapté pour recevoir l'équipement respiratoire dans une position rangée, ledit logement (32) présentant une ouverture (36), et
• un dispositif d'obturation (50) comportant au moins une porte (52 ; 54) présentant une face interne (52a ; 54a) et une face externe (52b ; 54b), le dispositif d'obturation est mobile entre une position fermée dans laquelle le dispositif d'obturation obture au moins partiellement l'ouverture (36) et une position ouverte dans laquelle il est au moins en partie à l'écart de l'ouverture,
ledit ensemble respiratoire étant **caractérisé en ce que** :
- le dispositif de rangement (30) comprend en outre un dispositif de sollicitation (60) apte à agir sur la porte (52 ; 54) pour écarter la porte (52 ; 54) de l'ouverture (36) lorsque le dispositif d'obturation (50) est en position fermée,
- l'équipement respiratoire comprend en outre un élément de retenue (70) liée à une portion de retenue (48) de la sangle (40),
- le dispositif de rangement comprend une partie de coopération (35) apte à coopérer avec l'élément de retenue (48) pour s'opposer à l'action du dispositif de sollicitation (60) et maintenir le dispositif d'obturation (50) en position fermée, lorsque l'équipement respiratoire est en position rangée.

2. Ensemble respiratoire selon la revendication 1, dans lequel la partie de coopération (35) s'étend sur la face externe (52b ; 54b) de la porte (52 ; 54) et vient en butée contre l'élément de retenue (70), lorsque l'équipement respiratoire est en position rangée.

3. Ensemble respiratoire selon l'une quelconque des revendications précédentes dans lequel :
- le dispositif de rangement (30) comprend en outre un dispositif de maintien (80) présentant un état actif et un état inactif,
- le dispositif de maintien (80) est apte à s'opposer à l'action du dispositif de sollicitation (60) et maintenir le dispositif d'obturation (50) en position fermée, lorsque le dispositif de maintien (80) est dans l'état actif,
- le dispositif de maintien (80) est dans l'état actif lorsque le masque respiratoire (10) est hors du dispositif de rangement (30), et
- le dispositif de maintien (80) est dans l'état inactif lorsque l'équipement respiratoire (10) est en position rangée.

4. Ensemble respiratoire selon la revendication précédente dans lequel le dispositif de maintien (80) est sécable pour libérer le dispositif d'obturation (80).

5. Ensemble respiratoire l'une quelconque des revendications précédentes dans lequel l'élément de retenue inhibe le dispositif de sollicitation (60) lorsqu'il coopère avec la partie de coopération.

6. Ensemble respiratoire selon l'une quelconque des revendications précédentes dans lequel la sangle (40) est élastiquement extensible.

7. Ensemble respiratoire selon l'une quelconque des revendications précédentes dans lequel la sangle (40) comprend :
- une branche principale (41) s'étendant entre la partie de préhension (42) et la partie de liaison (44), et
- une branche de maintien (45) s'étendant entre une partie de maintien (47) fixée sur la coque et une partie centrale (49) liée à la branche principale (45).

8. Ensemble respiratoire selon la revendication précédente dans lequel :
- la coque comprend un support périphérique (17) supportant une lentille transparente (18), et
- la partie de maintien (47) est fixée au support périphérique (17).

9. Ensemble respiratoire selon la revendication précédente dans lequel :
- le support périphérique (17) comprend une partie de bord supérieur (19a) s'étendant au-dessus de la lentille transparente (18),
- la partie de maintien (47) est fixée au support périphérique (17) à proximité de la partie de bord supérieur (19a).

10. Ensemble respiratoire selon l'une quelconque des revendications 7 à 9 dans lequel :
- la branche principale (41) de la sangle (40) présente entre la partie de liaison (44) liée au harnais (20) et la partie centrale (49) une première distance (d₄₉),
- la branche de maintien (45) présente entre la partie de maintien (47) fixée sur la coque (14, 17) et la partie centrale (49) une deuxième distance (d₄₅), et
- la deuxième distance (d₄₅) est comprise entre la moitié et le double de la première distance (d₄₉).

11. Ensemble respiratoire selon l'une quelconque des revendications précédentes dans lequel :
- le harnais (20) comprend un tube supérieur (22) et un tube inférieur (24),
- la partie de liaison constitue une première partie de liaison (44) reliée à une partie de connexion (23) du tube gonflable supérieur (22),
- la sangle (40) comprend en outre une branche secondaire (43) comprenant une deuxième portion de liaison (46), la deuxième partie de liaison (46) étant reliée à une partie de connexion (25) du tube gonflable inférieur (24),
- la branche secondaire (43) n'est pas fixée au tube gonflable supérieur (22).

12. Ensemble respiratoire selon la revendication précédente dans lequel :
- la branche secondaire (43) est liée à une partie intermédiaire (49) de la branche principale (41),
- la partie intermédiaire (49) est distante de la première partie de liaison (44) d'une distance intermédiaire (d₄₉),
- la portion de retenue (48) est distante de la première partie de liaison (44) d'une longueur totale (d₄₈), et
- la distance intermédiaire (d₄₉) est supérieure à 20% de la longueur totale (d₄₈).

13. Ensemble respiratoire selon l'une quelconque des revendications précédentes dans lequel :
- le harnais (20) comprend un tube extensible (22),
- la coque comprend un support périphérique (17) supportant une lentille transparente (18), et
- le tube extensible (22) est maintenu sur le support périphérique (17) par une patte de maintien (90).

14. Ensemble respiratoire selon la revendication précédente dans lequel :
- le support périphérique (17) comprend une partie de bord latéral (19c), et
- la patte de maintien (90) est fixée au bord latéral (19c).

15. Ensemble respiratoire selon la revendication précédente dans lequel la patte de maintien (90) est flexible et a une longueur (l₉₀) inférieure à 3 centimètres.

## Patentansprüche

1. Atemanordnung (1) für ein Luftfahrzeug, umfassend:
- eine Atemausrüstung (100), welche dazu vorgesehen ist, ein Atemgas zu einem Benutzer zu liefern, umfassend:
∘ eine Atemmaske (10), wobei die Atemmaske einen steifen Träger (11) und eine Schale (14, 17) umfasst, welche mit dem steifen Träger (11) gekoppelt ist, wobei die Schale (14, 17) einen Atemhohlraum (13, 15) aufweist und dazu eingerichtet ist, sich an dem Gesicht des Benutzers um den Mund und die Nase des Benutzers herum anzulegen,
∘ ein aufblasbares Gurtzeug (20), welches dazu eingerichtet ist, sich um den Kopf des Benutzers herum gegenüber der Schale (26) zu erstrecken, um die Schale (26) an dem Gesicht des Benutzers zu halten,
∘ ein Band (40), welches einen Greifabschnitt (42) und einen Kopplungsabschnitt (44) aufweist, wobei der Kopplungsabschnitt (44) mit dem Gurtzeug (20) gekoppelt ist,
- eine Ablagevorrichtung (30), umfassend:
∘ eine Aufnahme (32), welche dazu eingerichtet ist, die Atemausrüstung in einer verstauten Position aufzunehmen, wobei die Aufnahme (32) eine Öffnung (36) aufweist, und
∘ eine Verschlussvorrichtung (50), welche wenigstens eine Tür (52; 54) umfasst, welche eine innere Fläche (52a; 54a) und eine äußere Fläche (52b; 54b) aufweist, wobei die Verschlussvorrichtung zwischen einer geschlossenen Position, in welcher die Verschlussvorrichtung wenigstens teilweise die Öffnung (36) verschließt, und einer offenen Position beweglich ist, in welcher sie wenigstens teilweise entfernt von der Öffnung ist,
wobei die Atemvorrichtung **dadurch gekennzeichnet ist, dass**:
- die Ablagevorrichtung (30) ferner eine Anweisungsvorrichtung (60) umfasst, welche in der Lage ist, auf die Tür (52; 54) zu wirken, um die Tür (52; 54) von der Öffnung (36) zu entfernen, wenn die Verschlussvorrichtung (50) in geschlossener Position ist,
- die Atemausrüstung ferner ein Rückhalteelement (70) umfasst, welches an einem Rückhalteteil (48) des Bands (40) gekoppelt ist,
- die Ablagevorrichtung einen Zusammenwirkungsabschnitt (35) umfasst, welcher in der Lage ist, mit dem Rückhalteelement (48) zusammenzuwirken, um einer Wirkung der Anweisungsvorrichtung (60) entgegenzuwirken und die Verschlussvorrichtung (50) in geschlossener Position zu halten, wenn die Atemausrüstung in verstauter Position ist.

2. Atemanordnung nach Anspruch 1, wobei sich der Zusammenwirkungsabschnitt (35) an der äußeren Fläche (52b; 54b) der Tür (52; 54) erstreckt und in Anlage gegen das Zurückhaltelement (70) kommt, wenn die Atemausrüstung in verstauter Position ist.

3. Atemanordnung nach einem der vorhergehenden Ansprüche, wobei:
- die Ablagevorrichtung (30) ferner eine Haltevorrichtung (80) umfasst, welche einen aktiven Zustand und einen inaktiven Zustand aufweist,
- die Haltevorrichtung (80) in der Lage ist, der Wirkung der Anweisungsvorrichtung (60) entgegenzuwirken und die Verschlussvorrichtung (50) in geschlossener Position zu halten, wenn die Haltevorrichtung (80) in dem aktiven Zustand ist,
- die Haltevorrichtung (80) in dem aktiven Zustand ist, wenn die Atemmaske (10) außerhalb der Ablagevorrichtung (30) ist, und
- die Haltevorrichtung (80) in dem inaktiven Zustand ist, wenn die Atemausrüstung (10) in verstauter Position ist.

4. Atemanordnung nach dem vorhergehenden Anspruch, wobei die Haltevorrichtung (80) teilbar ist, um die Verschlussvorrichtung (80) freizugeben.

5. Atemanordnung nach einem der vorhergehenden Ansprüche, wobei das Rückhalteelement die Anweisungsvorrichtung (60) hemmt, wenn es mit dem Zusammenwirkungsabschnitt zusammenwirkt.

6. Atemanordnung nach einem der vorhergehenden Ansprüche, wobei das Band (40) elastisch ausdehnbar ist.

7. Atemanordnung nach einem der vorhergehenden Ansprüche, wobei das Band (40) umfasst:
- einen Hauptzweig (41), welcher sich zwischen dem Greifabschnitt (42) und dem Kopplungsabschnitt (44) erstreckt, und
- einen Haltezweig (45), welcher sich zwischen einem Halteabschnitt (47), welcher an der Schale befestigt ist, und einem zentralen Abschnitt (49) erstreckt, welcher an dem Hauptzweig (45) angebracht ist.

8. Atemanordnung nach dem vorhergehenden Anspruch, wobei:
- die Schale einen umfänglichen Träger (17) umfasst, welcher eine transparente Linse (18) trägt, und
- der Halteabschnitt (47) an dem umfänglichen Träger (17) befestigt ist.

9. Atemanordnung nach dem vorhergehenden Anspruch, wobei:
- der umfängliche Träger (17) einen oberen Randabschnitt (19a) umfasst, welcher sich oberhalb der transparenten Linse (18) erstreckt;
- der Halteabschnitt (47) an dem umfänglichen Träger (17) in der Nähe des Abschnitts des oberen Rands (19a) befestigt ist.

10. Atemanordnung nach einem der Ansprüche 7 bis 9, wobei:
- der Hauptzweig (41) des Bands (40) zwischen dem Kopplungsabschnitt (44), welcher mit dem Gurtzeug (20) gekoppelt ist, und dem zentralen Abschnitt (49) einen ersten Abstand (d₄₉) aufweist,
- der Haltezweig (45) zwischen dem Halteabschnitt (47), welcher an der Schale (14, 17) befestigt ist, und dem zentralen Abschnitt (49) einen zweiten Abstand (d₄₅) aufweist,
- der zweite Abstand (d₄₅) zwischen der Hälfte und dem Doppelten des ersten Abstands (d₄₉) beträgt.

11. Atemanordnung nach einem der vorhergehenden Ansprüche, wobei:
- das Gurtzeug (20) ein oberes Rohr (22) und ein unteres Rohr (24) umfasst,
- der Kopplungsabschnitt einen ersten Kopplungsabschnitt (44) bildet, welcher an einem Verbindungsabschnitt (23) an dem aufblasbaren oberen Rohr (22) angebracht ist,
- das Band (40) ferner einen sekundären Zweig (43) umfasst, welcher einen zweiten Kopplungsabschnitt (46) umfasst, wobei der zweite Kopplungsabschnitt (46) an einem Verbindungsabschnitt (25) des unteren aufblasbaren Rohrs (24) angebracht ist,
- der sekundäre Zweig (43) nicht an dem oberen aufblasbaren Rohr (22) befestigt ist.

12. Atemanordnung nach dem vorhergehenden Anspruch, wobei:
- der sekundäre Zweig (43) mit einem Zwischenabschnitt (49) des Hauptzweigs (41) gekoppelt ist,
- der Zwischenabschnitt (49) von dem ersten Kopplungsabschnitt (44) um einen Zwischenabstand (d₄₉) beabstandet ist,
- der Rückhalteteil (48) von dem ersten Kopplungsabschnitt (44) um eine Gesamtlänge (d₄₈) beabstandet ist, und
- der Zwischenabstand (d₄₉) größer als 20% der Gesamtlänge (d₄₈) ist.

13. Atemanordnung nach einem der vorhergehenden Ansprüche, wobei:
- das Gurtzeug (20) ein ausdehnbares Rohr (22) umfasst,
- die Schale einen umfänglichen Träger (17) umfasst, welcher eine transparente Linse (18) trägt, und
- das ausdehnbare Rohr (22) an dem umfänglichen Träger (17) durch eine Halteklaue (90) gehalten ist.

14. Atemanordnung nach dem vorhergehenden Anspruch, wobei:
- der umfängliche Träger (17) einen lateralen Randabschnitt (19c) umfasst, und
- die Halteklaue (90) an dem lateralen Rand (19c) befestigt ist.

15. Atemanordnung nach dem vorhergehenden Anspruch, wobei die Halteklaue (90) flexibel ist und eine Länge (l₉₀) aufweist, welche kleiner als 3 Zentimeter ist.

## Claims

1. Breathing assembly (1) for aircraft, comprising:
- breathing equipment (100) for supplying breathing gas to a user, comprising:
• a breathing mask (10), the breathing mask comprising a rigid support (11) and a shell (14, 17) attached to the rigid support (11), the shell (14, 17) having a breathing cavity (13, 15) and being adapted for application to the user's face around the user's mouth and nose,
• an inflatable harness (20) adapted to extend around the user's head opposite the shell (26) in order to hold the shell (26) on the user's face,
• a strap (40) having a gripping portion (42) and a connecting portion (44), the connecting portion (44) being attached to the harness (20),
- a storage unit (30) comprising:
• a housing (32) adapted to receive the breathing equipment in a stored position, said housing (32) having an opening (36), and
• a closure device (50) comprising at least one door (52; 54) having an inner face (52a; 54a) and an outer face (52b; 54b), the closure device being movable between a closed position where the closure device at least partially closes the opening (36) and an open position where it is at least partially clear of the opening,
said breathing assembly being **characterized in that**:
- the storage unit (30) further comprises a biasing device (60) able to act on the door (52; 54) to move the door (52; 54) away from the opening (36) when the closure device (50) is in the closed position,
- the breathing equipment further comprises a retaining member (70) attached to a retaining portion (48) of the strap (40),
- the storage unit comprises an engagement part (35) adapted to engage with the retaining member (48) to oppose the action of the biasing device (60) and hold the closure device (50) in the closed position, when the breathing equipment is in the stored position.

2. Breathing assembly according to claim 1, wherein the engagement part (35) extends over the outer face (52b; 54b) of the door (52; 54) and abuts against the retaining member (70) when the breathing equipment is in the stored position.

3. Breathing assembly according to any one of the preceding claims, wherein:
- the storage unit (30) further comprises a retaining device (80) having an active state and an inactive state,
- the retaining device (80) is able to oppose the action of the biasing device (60) and keep the closure device (50) in the closed position, when the retaining device (80) is in the active state,
- the retaining device (80) is in the active state when the breathing mask (10) is out of the storage unit (30), and
- the retaining device (80) is in the inactive state when the breathing equipment (10) is in the stored position.

4. Breathing assembly according to the preceding claim, wherein the retaining device (80) is breakable in order to release the closure device (80).

5. Breathing assembly according to any one of the preceding claims, wherein the retaining member obstructs the biasing device (60) when it is engaged with the engagement part.

6. Breathing assembly according to any one of the preceding claims, wherein the strap (40) is elastically extensible.

7. Breathing assembly according to any one of the preceding claims, wherein the strap (40) comprises:
- a main arm (41) extending between the gripping portion (42) and the connecting portion (44), and
- a retaining arm (45) extending between a retaining portion (47) fixed to the shell and a central portion (49) attached to the main arm (45).

8. Breathing assembly according to the preceding claim, wherein:
- the shell comprises a peripheral support (17) supporting a transparent lens (18), and
- the retaining portion (47) is fixed to the peripheral support (17).

9. Breathing assembly according to the preceding claim, wherein:
- the peripheral support (17) comprises an upper edge portion (19a) extending above the transparent lens (18),
- the retaining portion (47) is fixed to the peripheral support (17) near the upper edge portion (19a).

10. Breathing assembly according to any one of claims 7 to 9, wherein:
- the main arm (41) of the strap (40) has a first distance (d₄₉) between the connecting portion (44) attached to the harness (20) and the central portion (49),
- the retaining arm (45) has a second distance (d₄₅) between the retaining portion (47) fixed to the shell (14, 17) and the central portion (49), and
- the second distance (d₄₅) is between one half and twice the first distance (d₄₉).

11. Breathing assembly according to any one of the preceding claims, wherein:
- the harness (20) comprises an upper tube (22) and a lower tube (24),
- the connecting portion constitutes a first connecting portion (44) connected to an attachment portion (23) of the upper inflatable tube (22),
- the strap (40) further comprises a secondary arm (43) comprising a second connecting portion (46), the second connecting portion (46) being connected to an attachment portion (25) of the lower inflatable tube (24),
- the secondary arm (43) is not fixed to the upper inflatable tube (22).

12. Breathing assembly according to the preceding claim, wherein:
- the secondary arm (43) is connected to an intermediate portion (49) of the main arm (41),
- the intermediate portion (49) is distanced from the first connecting portion (44) by an intermediate distance (d₄₉),
- the retaining portion (48) is distanced from the first connecting portion (44) by a total length (d₄₈), and
- the intermediate distance (d₄₉) is more than 20% of the total length (d₄₈).

13. Breathing assembly according to any one of the preceding claims, wherein:
- the harness (20) comprises an extensible tube (22),
- the shell comprises a peripheral support (17) supporting a transparent lens (18), and
- the extensible tube (22) is held on the peripheral support (17) by a retaining tab (90).

14. Breathing assembly according to the preceding claim, wherein:
- the peripheral support (17) comprises a side edge portion (19c), and
- the retaining tab (90) is fixed to the side edge (19c).

15. Breathing assembly according to the preceding claim, wherein the retaining tab (90) is flexible and has a length (l₉₀) of less than 3 centimeters.
